# EUROPEAN PATENT SPECIFICATION

(11) **EP 0 593 571 B1**
(45) Date of publication and mention of the grant of the patent: **09.09.1998**
(21) Application number: 92914282.6
(22) Date of filing: 08.07.1992
(51) Int. Cl.: H04N 5/76

(54) **VIDEO RECORDER SYSTEM**
System mit Videoaufzeichnungsgerät
SYSTEME D'ENREGISTREMENT VIDEO

(30) Priority: 08.07.1991 GB 9114705
(43) Date of publication of application: 27.04.1994
(73) Proprietor: AMSTRAD PUBLIC LIMITED COMPANY, Brentwood, Essex CM 14 4EF (GB)
(72) Inventor: SAWARD, Ian, Wickford Essex SS12 0AZ (GB)
(74) Representative: Abnett, Richard Charles
(86) International application number: GB9201239
(87) International publication number: WO9301682

(56) References cited:
- EP-A- 0 271 748
- WO-A-90/03706
- WO-A-90/08442

## Description

### Background of the Invention

This invention relates to a video recorder system of the type comprising means for receiving an input video signal in scrambled form, a descrambler coupled to the receiving means for selectively descrambling the received video signal to generate a descrambled signal, recording means coupled to the descrambler to record the descrambled signal, enabling means for enabling the descrambler, the enabling means including means for reading a portable payment member carrying charging information, and means actuatable by a viewer to confirm a charge operation with respect to the payment member to permit the enabling means to enable the descrambler, and programmer means programmable by a viewer to store data concerning a programme to be received at a future time and operative when the programme is received to activate the recording means.

Prior European patent application number EP-A-0 271 748 describes a system for processing a broadcast coded television signal, in which a receiver decodes the signal only if a time signal from a real-time clock is within a given time interval. The given time interval is broadcast with the coded signal. EP-A-0 271 748 also acknowledges an earlier US patent, numbers US-A-4325078, which describe a "Pay-per-View" television system in which a receiver comprises a decoder which is similarly only activated when the real time is within a given time interval. In this case, however, the time interval is recorded on a magnetic card or tape which is provided by the broadcaster to the user for a fee and which can be read by the receiver. A magnetic reader reads the data on the card and compares it with reference data stored in the receiver to determine whether the card is valid for the programme sought to be viewed. If so, the programme is decoded and the appropriate data on the card obliterated to prevent reuse.

A system of the type described in the opening paragraph above is constituted by a video recorder adapted to receive so-called pay TV (television) or subscription television services to be broadcast by satellite TV systems for reception on satellite TV receivers. It is intended that pay TV systems, such as those known by the trade mark Videocrypt and Eurocrypt, should make use of smart cards to control access to services. A smart card is a plastics card the size of an ISO credit card but carrying an integrated circuit embedded within it. These systems may allow payment either by subscription, or by payment per event, or by tokens, namely time credited into the card. Payment by event or by tokens requires the viewer to make a positive affirmation or authorisation of purchase each time a programme requiring payment is viewed. This affirmation or confirmation or authorisation may be achieved by pressing a specified button or sequence of buttons.

### Summary of the Invention

We have appreciated that while such prior art systems are fine for television receivers, a serious problem arises when they are used in relation to video recorders. Typically video recorders may be programmed to record a programme at a future time. Information concerning the start time and stop time (or duration) of the programme and the television channel are set into a timer by the viewer, and will turn on the recorder at the specified time to record the programme. Alternatively a programme code may be stored and compared with programme codes transmitted with the television signal. Such timers are well-known in the context of video cassette recorders and are included in some satellite TV receivers. The timers can be set by a hand-held remote control or directly on the recorder unit.

We have appreciated that a problem arises because such a system can not be used to record a programme for which payment by event or payment by tokens is required. This is because such programmes require affirmation of payment as the programme is transmitted, and a major purpose of a video recorder is that it records programmes when the viewer is absent and thus is unable to make the necessary affirmation of payment.

The invention solves this problem as follows. According to the invention, in a video recorder system of the type defined at the beginning, the programmer means is operative when the programme to be recorded is received to automatically authorise a charge operation with respect to the payment member.

The invention may be implemented in any of a number of ways. For example in one preferred embodiment, the programmer means includes a means actuable by a viewer when setting a programme to indicate authorisation of payment for the programme to be recorded. Alternatively, in a second preferred embodiment, the programmer means includes a means for storing an indication of whether an authorisation of payment is associated with a programme to be recorded.

### Brief Description of the Drawings

The invention will now be described in more detail by way of example with reference to the drawings, in which:
**Figure 1** is a very diagrammatic drawing showing a video recorder system;
**Figure 2** is a block diagram showing the main components of the control circuits for the recorder;
**Figure 3** is a slightly more detailed block diagram of one possible implementation of the system; and
**Figure 4** illustrates one possible form of stored data in the programmer to record a future programme.

### Detailed Description of the Preferred Embodiment

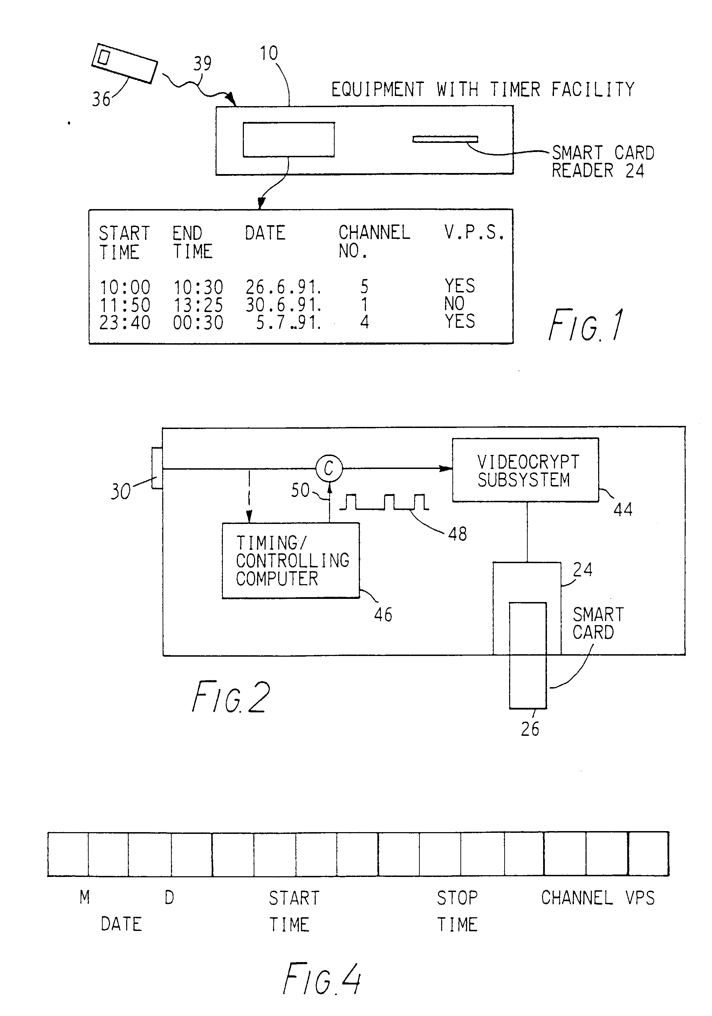

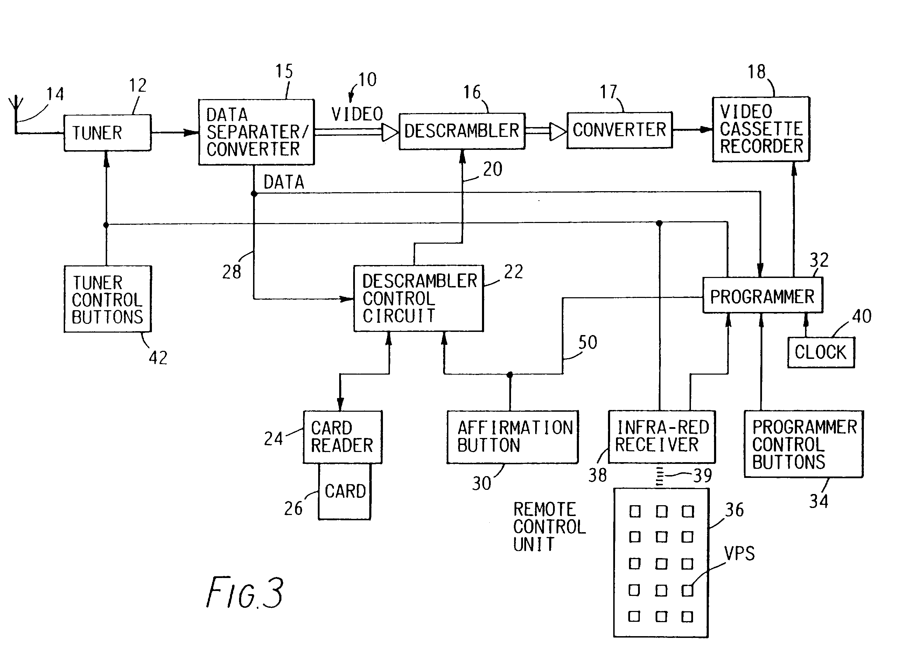

The video recorder system 10 illustrated in Figures 1 to 3, and more particularly Figure 3, includes a tuner 12 for connection to a receiving antenna 14 in the form of a satellite dish. The tuner includes necessary down-conversion circuitry of known type. A data separator/converter 15 receives the output of the tuner and separates it into a video signal and a data signal. The video output of the circuit 15 is applied to a descrambler 16 which supplies a descrambled signal through a converter circuit 17 to a video cassette recorder unit 18. The received signal is, or has programmes which are, scrambled, such as by the so-called active line rotation method or line shuffling method. The descrambler 16 has a control input 20 from a descrambler control circuit 22. This is coupled to a card reader 24 for reading a smart card 26 carrying charging information. The card may carry an indication that a subscription has been paid for some or all programmes, or a credit amount which is debited as viewing takes place, or a total indicating the accumulated charge for programmes viewed. The descrambler control circuit 22 receives the data output 28 from the circuit 15 containing information which is compared with information in the circuit 22 or derived from the card. More particularly the data may include a key which is used in a decryption operation in circuit 22 to provide a descrambling key for the descrambler. The data in circuit 22 or on the card 26 may be updated "off-air" by the transmitted data signal. The circuit 22 is also connected to a button 30 which can be actuated by a viewer to affirm a payment operation.

A programmer 32 is used to store information entered by a viewer as to programmes to be recorded at a future time. The information is entered by buttons 34 on the front of the recorder, or via a hand-held remote control unit 36 which communicates with a receiver 38 by an infra-red link 39. The programmer is connected to a clock 40. The information stored may be as indicated in Figure 4, including the date of the programme to be recorded (or a special code indicating "every day" or a specified day of the week), the start time, the stop time and the channel to which the tuner is to be set. Additionally the data includes a VPS (view pay system) code which indicates whether a special VPS button on the remote control unit was pressed when the viewer set the programmer to record this programme. This information is stored in the programmer 32.

In the programming operation, the viewer successively enters the data required, including the VPS code if appropriate. Where a remote control is used, the data can be transmitted digit by digit as entered, or can be stored in the remote control and displayed on an LCD display on the control. When all the data has been entered it is then transmitted to the recorder (so-called LCD programming).

The programmer 32 continuously compares the stored start times with the clock output, and when a programme is to be recorded, sets the tuner 12 to receive the correct channel. In normal use the tuner can be set by tuner control buttons 42 or by use of the remote control unit. The programmer starts the cassette recorder 18.

Additionally, in accordance with the invention, the programmer 32 sends a signal to the descrambler control circuit 22 mimicing that which it would receive if the affirmation button 30 were depressed at the time when the programme was being received. In this way the descrambler is enabled, subject of course to the card permitting reception of this programme. The descrambled signal from the descrambler 16 is then converted by the converter 17 into a form suitable for recording, and applied to the recorder 18. The card is meanwhile automatically debited with an amount corresponding to the cost of receiving that programme.

In practice the circuits shown in descrambler control circuit 22 and programmer 32 may be constituted by a suitably programmed microprocessor. Also the various buttons shown separately in Figure 3 may in fact be the same buttons operated in different modes, in known manner.

In Figure 2 the descrambler 16 and descrambler control circuit 22 are shown as a Videocrypt (TM) subsystem 44, and the programmer 32 as a timing/controlling computer 46 which provides pulses 48 on a line 50 to the subsystem 44. The authorise key (or affirmation button or confirmation button) can be read by the microprocessor 46, or can simply provide a command signal.

In any event it will be seen from the above that when the programmer or timer is set to record a programme, an additional step allows the viewer to set the timer into a "view pay system" (VPS) mode to pay for the future programme. The special VPS key (or authorise key) on the remote control unit is used, and if the VPS flag is set, the stored data is thereby marked to indicate that it concerns a programme which is to be paid for when it is received. When the programme is received, the timer automatically turns on the recorder, and configures it to select the channel previously defined by the viewer. If the programme was marked with the VPS flag, then the payment procedure will be started. The payment method differs depending upon the type of pay TV system used.

With the Videocrypt system, "pay per view" and "pay by time" smart cards may be used in the future. To facilitate payment by either of these cards an authorise key exists, which the viewer presses to confirm payment. In the system described above, the timer microprocessor also has control of or access to the authorise key, which it pulses for a specified time to confirm payment. The descrambler recognises this and debits the card accordingly.

With the Eurocrypt system, "pay per view", "pay by time" and "pay per programme" may all be used in the future. In this case the software performing the timing function usually also has control over the descrambling and payment process. The viewer is generally asked a question such as "Would you like to purchase this programme?" if it is pre-booked or available for purchase. There is no dedicated authorise key in a conventional receiver. In the system illustrated, if the timer has had the VPS flag set by depression of the VPS key during the programming operation, the software foregoes this question and automatically debits the card accordingly.

## Claims

1. A video recorder system of the type comprising means (14) for receiving an input video signal in scrambled form, a descrambler (16) coupled to the receiving means for selectively descrambling the received video signal to generate a descrambled signal, recording means (18) coupled to the descrambler to record the descrambled signal, enabling means (22,24,26,30) for enabling the descrambler, the enabling means including means (24) for reading a portable payment member (26) carrying charging information, and means (30) actuable by a viewer to authorise a charge operation with respect to the payment member to permit the enabling means to enable the descrambler, and programmer means (32, 34) programmable by a viewer to store data concerning a programme to be received at a future time and operative when the programme is received to activate the recorder system, characterised in that the programmer means (32) is operative when the programme to be recorded is received to automatically authorise a charge operation with respect to the payment member (26).

2. A video recorder system according to claim 1, in which the programmer means (32) is coupled (50) to the enabling means (22) to command the enabling means both to enable the descrambler and to authorise a charge operation with respect to the payment member.

3. A video recorder system according to claim 1 or 2, in which the programmer means includes a means (34) actuable by a viewer when setting a programme to indicate authorisation of payment for the programme to be recorded.

4. A video recorder system according to claim 1, 2 or 3, in which the programmer means includes a means (32) for storing an indication of whether an authorisation of payment is associated with a programme to be recorded.

5. A video recorder system according to any preceding claim, in which the payment member is a portable payment card (26).

## Patentansprüche

1. Videorecordersystem der Art, die folgendes umfaßt: ein Mittel (14) zum Empfangen eines Eingangsvideosignals in verschlüsselter Form, einen mit dem Empfangsmittel gekoppelten Entschlüssler (16) zum selektiven Entschlüsseln des empfangenen Videosignals zum Erzeugen eines entschlüsselten Signals, ein mit dem Entschlüssler gekoppeltes Aufzeichnungsmittel (18) zum Aufzeichnen des entschlüsselten Signals, Freigabemittel (22, 24, 26, 30) zum Freigeben des Entschlüsslers, wobei das Freigabemittel ein Mittel (24) zum Lesen eines tragbaren Zahlungselementes (26) beinhaltet, das Gebührendaten enthält, und ein Mittel (30), das von einem Zuschauer betätigt werden kann, um einen Gebührenvorgang in bezug auf das Zahlungselement zu autorisieren, damit das Freigabemittel den Entschlüssler freigeben kann, und ein Programmierungsmittel (32, 34), das von einem Zuschauer zum Speichern von Daten über ein Programm programmiert werden kann, das zu einer späteren Zeit empfangen werden soll, und das die Aufgabe hat, beim Empfangen des Programms das Recordersystem zu aktivieren, dadurch gekennzeichnet, daß das Programmierungsmittel (32) die Aufgabe hat, beim Empfangen des aufzuzeichnenden Programms automatisch einen Gebührenvorgang in bezug auf das Zahlungselement (26) zu autorisieren.

2. Videorecordersystem nach Anspruch 1, bei dem das Programmierungsmittel (32) mit dem Freigabemittel (22) gekoppelt (50) ist, um das Freigabemittel anzuweisen, den Entschlüssler freizugeben und einen Gebührenvorgang in bezug auf das Zahlungselement zu autorisieren.

3. Videorecordersystem nach Anspruch 1 oder 2, bei dem das Programmierungsmittel ein Mittel (34) beinhaltet, das von einem Zuschauer beim Einstellen eines Programms betätigt werden kann, um die Zahlungsautorisierung für das aufzuzeichnende Programm anzuzeigen.

4. Videorecordersystem nach Anspruch 1, 2 oder 3, bei dem das Programmierungsmittel ein Mittel (32) zum Speichern einer Anzeige darüber beinhaltet, ob eine Zahlungsautorisierung mit einem aufzuzeichnenden Programm assoziiert ist.

5. Videorecordersystem nach einem der vorherigen Ansprüche, bei dem das Zahlungselement eine tragbare Zahlkarte (26) ist.

## Revendications

1. Système d'enregistrement vidéo du type comprenant un moyen (14) pour recevoir un signal vidéo d'entrée sous forme brouillée, un désembrouilleur (16) couplé au moyen de réception pour désembrouiller sélectivement le signal vidéo reçu en vue de générer un signal désembrouillé, un moyen d'enregistrement (18) couplé au désembrouilleur en vue d'enregistrer le signal désembrouillé, un moyen d'activation (22, 24, 26, 30) pour activer le désembrouilleur, le moyen d'activation comportant un moyen (24) pour lire un élément de paiement portable (26) portant des informations de facturation, et un moyen (30) actionnable par un téléspectateur en vue d'autoriser une opération de facturation relativement à l'élément de paiement pour permettre au moyen d'activation d'activer le désembrouilleur, et un moyen de programmation (32, 34) programmable par un téléspectateur en vue de mémoriser des données concernant un programme devant être reçu dans le futur et fonctionnant quand le programme est reçu en vue d'actionner le système d'enregistrement, caractérisé en ce que le moyen de programmation (32) fonctionne quand le programme à enregistrer est reçu en vue d'autoriser automatiquement une opération de facturation relativement à l'élément de paiement (26).

2. Système d'enregistrement vidéo conformément à la revendication 1, dans lequel le moyen de programmation (32) est couplé (50) au moyen d'activation (22) en vue de commander le moyen d'activation à la fois en vue d'activer le désembrouilleur et d'autoriser une opération de facturation relativement à l'élément de paiement.

3. Système d'enregistrement vidéo conformément à la revendication 1 ou 2, dans lequel le moyen de programmation comporte un moyen (34) actionnable par un téléspectateur lors du réglage d'un programme en vue d'indiquer l'autorisation du paiement du programme à enregistrer.

4. Système d'enregistrement vidéo conformément à la revendication 1, 2 ou 3, dans lequel le moyen de programmation comporte un moyen (32) pour mémoriser une indication indiquant si une autorisation de paiement est associée à un programme à enregistrer.

5. Système d'enregistrement vidéo conformément à l'une quelconque des revendications précédentes, dans lequel l'élément de paiement est une carte de paiement portable (26).
